# EUROPÄISCHE PATENTSCHRIFT

(11) **EP 1 151 661 B1**
(45) Veröffentlichungstag und Bekanntmachung des Hinweises auf die Patenterteilung: **08.03.2006**
(21) Anmeldenummer: 01107656.9
(22) Anmeldetag: 28.03.2001
(51) Int. Cl.: A01F 29/20

(54) **Erntemaschine, insbesondere selbstfahrender Feldhäcksler**
Harvesting machine especially self-propelled forage harvester
Récolteuse en particulier faucheuse-hacheuse automotrice

(30) Priorität: 04.05.2000 DE 10021662
(43) Veröffentlichungstag der Anmeldung: 07.11.2001
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Radke, Karl-Heinz, 02681 Wilthen (DE)
(74) Vertreter: Busse & Busse Patentanwälte

(56) Entgegenhaltungen:
- EP-A- 0 683 971
- WO-A-85/05532
- DE-A- 19 522 056
- DE-U- 8 813 953
- FR-A- 2 320 042
- FR-A- 2 410 950
- US-A- 1 639 807
- US-A- 2 656 868

## Beschreibung

Die Erfindung bezieht sich auf eine Erntemaschine, insbesondere einen selbstfahrenden Feldhäcksler zum Aufnehmen und Häckseln von Erntegut wie Mais, Anwelkgras, Grünfutter und dergleichen, mit einer Aufnahme - und Einzugsorganen nachgeordneten Häckseleinrichtung, die eine Häckseltrommel mit in im Wesentlichen V-förmiger Anordnung in Umfangsrichtung der Hüchseltrommel versetzt zueinander angeordneten Schneidwerkzeugen umfaßt. Selbstfahrende Feldhäcksler der vorgenannten Art haben in zunehmendem Maße Forderungen nach hohen Schnittfrequenzen zu erfüllen, die bei kleinen Trommeldurchmessern unter 700 mm nur mit sehr hohen Trommeldrehzahlen erreichbar sind. Bei bekannten Feldhäckslern führt das in der Praxis zu hohen Lärm- und Schwingungsbelastungen sowie einem hohen Leistungsbedarf.

Aus der DE 195 22 056 A1 ist eine Erntemaschine der gattungsgemäßen Bauart bekannt, die eine Häckseltrommel mit einem Überschnittmaß der in Umfangsrichtung vor- und nachgeordneten Schneidwerkzeuge aufweist. Das Überschnittmaß der Schneidwerkzeuge bei dieser vorbekannten Erntemaschine ist jedoch derart groß, daß aufgrund des großen Überschnittmaßes der anfallende Leistungsbedarf sinusförmig ist, womit Belastungsspitzenbereiche auftreten, woraus resulitert, daß ein außerordentlich hoher Leistungsbedarf zur Verfügung zu stellen ist, wenn zwei einander zugeordnete Messer im Schneideinsatz sind.

Es ist Aufgabe der vorliegenden Erfindung, eine Erntemaschine der eingangs genannten Art zu schaffen, die sich für hohe Schnittfrequenzen bei vermindertem Leistungsbedarf und verringerten Lärm- und Schwingungsbelastungen eignet. Zudem soll der Drehmomentenverlauf eine günstige Charakteristik aufweisen.

Zur Lösung dieser Aufgabe zeichnet sich eine Erntemaschine mit den Merkmalen des Patentanspruchs 1 aus.

Mit der Erntemaschine nach der Erfindung lassen sich hohe Schnittfrequenzen schon bei Drehzahlen unter 1000 U/min erreichen, wobei durch das Überschnittmaß der jeweils in Umfangsrichtung vor- und nachgeordneten Schneidwerkzeuge ein außerordentlich günstiger Drehmomentenverlauf erreichbar ist, da durch das Überschnittmaß der Schneidwerkzeuge ein kontinuierliches Schneiden möglich ist. Drehmomentenspitzen sind daher aufgrund einer Vergleichmäßigung vermieden. Dadurch lassen sich auch sehr große Durchmesser der Häckseltrommel realisieren, was bei einer relativ geringen Masse zu einem hohen Trägheitsmoment der Häckseltrommel führt. Damit sind Belastungsstöße vermindert. Das führt zu außerordentlich günstigen Antriebsbedingungen. Ebenfalls ist die Havariegefährdung mit der Gegenschneide aufgrund des verbesserten Schwingungsverhaltens verringert. Der Leistungsbedarf ist insgesamt reduziert.

Die Schneidwerkzeuge sind schräg ausgerichtet mit einer derartigen Schrägausrichtung, daß im Außenbreitenbereich der Häckseltrommel der Schneidvorgang an einem Schneidwerkzeug beginnt und sich kontinuierlich in Richtung der Trommelmitte fortsetzt.

Benachbarte Schneidwerkzeuge in im wesentlichen V-förmiger Anordnung in Umfangsrichtung sind versetzt zueinander angeordnet, wobei benachbarte bzw. nebeneinander angeordnete Schneidwerkzeuge (bezogen auf die Häckseltrommelbreite) zueinander ein Überschnittmaß haben, da das jeweils in der Breite benachbarte Schneidwerkzeug einer solchen Schneidwerkzeuganordnung auch wiederum in Umfangsrichtung durch das Versatzmaß benachbart ist. Das in Rotationsrichtung letzte Schneidwerkzeug einer solchen Schneidwerkzeuganordnung bildet dann wiederum ein Überschnittmaß mit dem ersten Schneidwerkzeug der nächstfolgenden Schneidwerkzeuganordnung, was zu dem kontinuierlichen Schneidverhalten führt.

Die Schneidwerkzeuge haben eine Schrägausrichtung bzw. einen Zügigkeitswinkel "W" von 8° bis 13°. Mit dem Feldhäcksler nach der Erfindung lassen sich Häcksellängen von 3mm bis 30 mm erreichen. Dabei lassen sich 1 bis 4 Messer pro Schneidmesseranordnung vorsehen. Der Durchmesser der Häckseltrommel kann relativ groß gewählt werden, so daß 16 bis 20 Messeranordnungen mit 1 bis 4 Schneidwerkzeugen nebeneinander über den Umfang verteilt vorgesehen werden können. Dabei lassen sich auch Häckseltrommelbreiten von 800mm bis 920mm ohne weiteres realisieren, wobei sichergestellt ist, daß eine Schneidwerkzeuganordnung immer mit einem Schneidbereich mit einer Gegenschneide arbeitet. Damit lassen sich sehr hohe Schnittfrequenzen bei den angegebenen Schnittlängen verwirklichen, wobei bei entsprechender Messerzahl und Drehzahlen unter 1000 Umdrehungen pro Minute ein sehr gutes Schwingungsverhalten zu erreichen ist. Hohe Messerzahlen sichern in Verbindung mit der großen Breite bei Einhaltung eines Neigungswinkels bzw. Zügigkeitswinkels "W" im angegebenen Bereich den angestrebten Überschnitt zwischen vor- und nachgeordneten Schneidwerkzeugen. Auch Schneidwerkzeugaufsetzer durch Schwingungen auf einem Gegenwerkzeug werden vermieden.

Weitere Einzelheiten der Erfindung ergeben sich aus der nachfolgenden Beschreibung und der Zeichnung. In der Zeichnung zeigt:

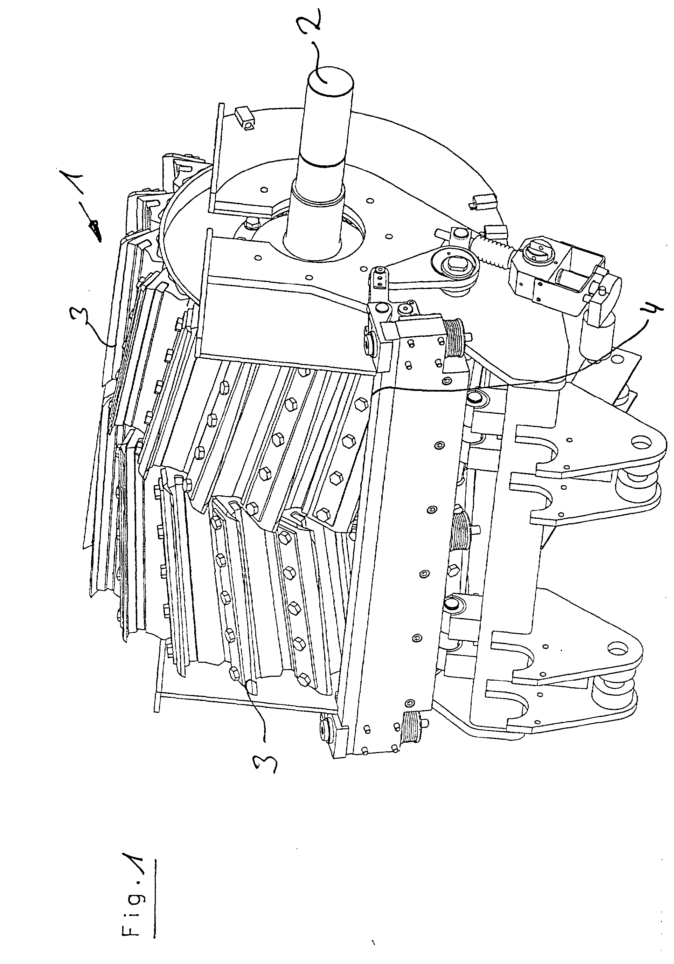

- Fig. 1: eine perspektivische Vorderansicht eines Ausführungsbeispiels einer Häckseltrommel für eine Erntemaschine nach der Erfindung,

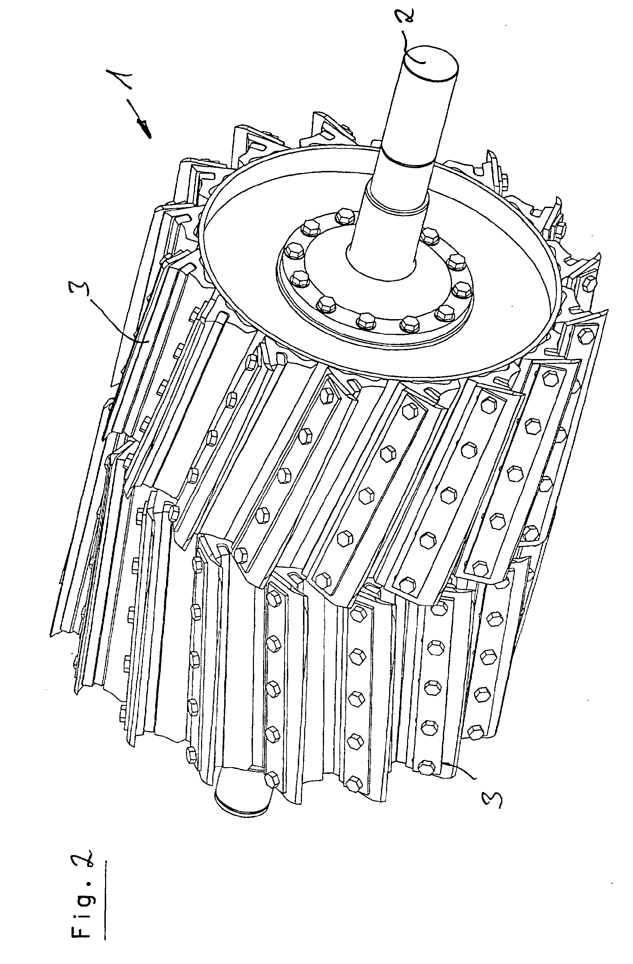

- Fig. 2: eine zu Fig. 1 analoge Einzeldarstellung der Trommel;
- Fig. 3: eine Vorderansicht auf das Ausführungsbeispiel nach Fig. 1.

In der Zeichnung sind gleichwirkende Teile mit gleichen Bezugsziffern beziffert. Auf die Darstellung der gesamten Erntemaschine ist der Übersichtlichkeit wegen verzichtet worden. Allgemein mit 1 ist die Häckseltrommel einer Häckseleinrichtung für eine Erntemaschine beziffert, die Aufnahme- und Einzugsorganen der Erntemaschine nachgeordnet ist. Diese wird über eine Antriebswelle 2 und über nicht näher dargestellte Getriebe - und motorische Einheiten angetrieben. Auf dem Umfang der Trommel 1 versetzt sind Schneidwerkzeuge 3 angeordnet, und zwar Schneidmesser. Diese sind bei dem gezeigten Ausführungsbeispiel über die Breite der Trommel 1 in zwei Reihen angeordnet, und zwar jeweils derart, daß diese in im Wesentlichen versetzter V-förmiger Anordnung ausgerichtet sind mit der V-Spitze in etwa der Mitte der Trommel 1. Die Schrägausrichtung der Schneidwerkzeuge 3 ist dabei derart gewählt, daß bei einer Trommelbreite zwischen 800mm bis 920mm ein Neigungs- bzw. Zügigkeitswinkel "W" im Bereich von 8° bis 13 ° vorgesehen ist.

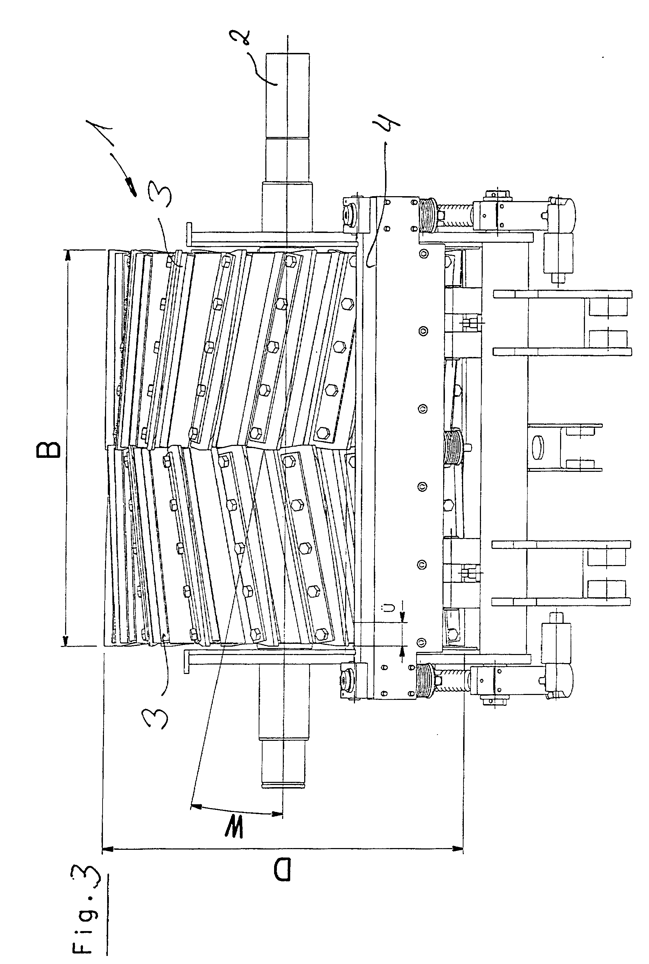

Die jeweils vor- und nachgeordneten Schneidmesser 3 sind dabei so ausgerichtet und haben eine derartige aufeinander abgestimmte Länge, daß jeweils vor- und nachgeordnete Schneidmesser ein Überschnittmaß "Ü" (Fig. 3) aufweisen, so daß an der Gegenschneide 4 jeweils immer ein kontinuierlich wirksamer Schneidbereich für das Erntegut gegeben ist. Bei dieser Ausrichtung und durch das Überschnittmaß lassen sich bei den angestrebten Trommelbreiten von 800mm bis 920mm und einem Trommeldurchmesser im Bereich von 720mm bis 850mm 16 bis 20 Schneidmesseranordnungen, die in dem gezeigten Ausführungsbeispiel durch jeweils 2 der V-förmigen Schneidmesser gebildet sind, realisieren. Es können jedoch alternativ auch 1, 3 oder auch 4 Schneidmesser pro Schneidmesseranordnung vorgesehen sein. Insgesamt weist eine Erntemaschine mit einer vorbeschriebenen Häckseltrommel ein außerordentlich günstiges Schwingungs- und Lärmbelästigungsverhalten aus. Eine derartige Erntemaschine eignet sich auch für Häcksellängen von 3mm bis 30mm bei hohen Schnittfrequenzen.

## Patentansprüche

1. Erntemaschine, insbesondere selbstfahrender Feldhäcksler zum Aufnehmen und Häckseln von Mais, Anwelkgras, Grünfutter und dergleichen Erntegut, mit einer Aufnahme- und Einzugsorganen nachgeordneten Häckseleinrichtung, die eine Häckseltrommel mit in im Wesentlichen V-förmiger Anordnung in Umfangsrichtung der Häckseltrommel (1) versetzt zueinander angeordneten Schneidwerkzeugen (3) umfaßt, **dadurch gekennzeichnet, daß** die jeweils vor- und nachgeordneten Schneidwerkzeuge (3) ein Überschnittmaß Ü von 4 bis 20 mm haben.

2. Erntemaschine nach Anspruch 1, **dadurch gekennzeichnet, daß** die Schneidwerkzeuge vorzugsweise eine Schrägausrichtung W zur Horizontalen von 8° bis 13° haben,

3. Erntemaschine nach Anspruch 1 oder 2, **dadurch gekennzeichnet, daß** in Umfangsrichtung der Häckseltrommel (1) 16 bis 20 Schneidwerkzeuganordnungen mit jeweils 1 bis 4 Schneidwerkzeugen vorgesehen sind.

4. Erntemaschine nach einem der Ansprüche 1 bis 3, **dadurch gekennzeichnet, daß** die Häckseltrommel (1) einen Durchmesser von > 700 mm und eine Breite von > 800 mm hat.

## Claims

1. Harvesting machine, especially a self-propelled forage harvester for receiving and cutting maize, wilted grass, green fodder and similar harvested material, with a cutting device arranged behind receiving and drawing-in mechanisms, which device comprises a cutting drum with cutting tools (3) mounted offset in relation to each other in an essentially V-shaped arrangement in the circumferential direction of the cutting drum (1), **characterised in that** the cutting tools (3) arranged in front and at the rear have an overlap U of 4 to 20 mm.

2. Harvesting machine according to claim 1, **characterised in that** the cutting tools preferably have an oblique alignment W to the horizontal of 8° to 13°.

3. Harvesting machine according to claim 1 or 2, **characterised in that** 16 to 20 cutting tool arrangements, each with 1 to 4 cutting tools, are provided in the circumferential direction of the cutting drum (1).

4. Harvesting machine according to any one of claims 1 to 3, **characterised in that** the cutting drum (1) has a diameter of > 700 mm and a width of > 800 mm.

## Revendications

1. Récolteuse, en particulier une faucheuse-hacheuse automotrice destinée à ramasser et à hacher du mais, du foin, du fourrage vert et un produit de récolte similaire, présentant un dispositif hacheur disposé en aval d'organes de ramassage et d'admission lequel comporte un tambour de hachage présentant des outils de coupe (3) disposés essentiellement en forme de V et de façon décalée les uns par rapport aux autres dans le sens de la circonférence du tambour de hachage (1), **caractérisée en ce que** les outils de coupe (3) à chaque fois disposés à l'avant et à l'arrière ont une dimension de recouvrement Ü de 4 à 20 mm.

2. Récolteuse selon la revendication 1, **caractérisée en ce que** les outils de coupe ont de préférence une orientation inclinée W de 8° à 13° par rapport à l'horizontale.

3. Récolteuse selon la revendication 1 ou 2, **caractérisée en ce que** 16 à 20 dispositions d'outil de coupe comportant chacune 1 à 4 outils de coupe sont prévues dans le sens de la circonférence du tambour de hachage (1).

4. Récolteuse selon l'une quelconque des revendications 1 à 3, **caractérisée en ce que** le tambour de hachage (1) présente un diamètre > 700 mm et une largeur > 800 mm.
